# EUROPEAN PATENT SPECIFICATION

(11) **EP 2 325 030 B1**
(45) Date of publication and mention of the grant of the patent: **21.08.2013**
(21) Application number: 10191991.8
(22) Date of filing: 20.11.2010
(51) Int. Cl.: B60G 3/20, B60G 9/02, B60B 33/04, B60K 7/00, B60K 17/04, B62D 7/04, B60P 1/02

(54) **Trailer trolley**
Radeinheit für Anhänger
Ensemble roue pour remorque

(30) Priority: 20.11.2009 IT TO20090894
(43) Date of publication of application: 25.05.2011
(73) Proprietor: Industrie Cometto S.p.A., 12011 Borgo San Dalmazzo (IT)
(72) Inventor: Ghinamo, Paolo, 12012, Boves (IT); Terzuolo, Pierluigi, 12100, Cuneo (IT)
(74) Representative: Bergadano, Mirko

(56) References cited:
- WO-A1-95/15271
- FR-A- 1 521 618
- US-A- 2 033 298
- US-A- 2 862 724
- US-A- 4 823 896
- US-A1- 2007 262 552
- US-B1- 6 357 793

## Description

The present invention relates to a trailer trolley.

Tyred-wheel transport vehicles are known to employ tractor-towed trailers comprising a frame defining a load bed, and a number of tyred-wheel trolleys, each of which is connected to the frame by a respective mechanical vertical-axis pivot, and comprises a tyred-wheel axle, and a hydraulic suspension between the pivot and the axle.

A trailer trolley comprising the features of the preamble of claim 1 is known from US-A-2007/0262552.

Each suspension comprises a supporting structure connected to the pivot and a regular articulated parallelogram transmission with parallel equal arms. One of the short arms of the transmission is substantially defined by part of the supporting structure, and the other short arm is fitted integrally with a projecting hinge pin. A bushing is fitted to the hinge pin, is connected integrally to the axle, and allows the axle to oscillate about a hinge axis perpendicular to the axle wheel axis of rotation and coincident with the pin axis.

Though widely used, known suspensions of the above type are unsatisfactory, mainly by allowing no increase in the load on the trolley over and above a given threshold. This is mainly due to the design of the mechanical transmission, in which the long arms are not only parallel but also fairly close together, thus limiting the load-resisting action or torque generated by the transmission. And simply spacing the arms further apart would be unfeasible in terms of acceptable maximum clearance.

Also because of the regular articulated parallelogram transmission, the axle, when moving between the top- and bottommost position with respect to the load bed of the trailer, describes a circular trajectory which determines the maximum longitudinal clearance required. A need is felt to reduce this maximum longitudinal clearance as much as possible, in that any reduction, however small, enables closer spacing and an increase in the number of axles for a given trailer size, thus increasing the payload per unit area of the load bed.

Known suspensions of the above type are also unsatisfactory in terms of performance, by allowing the axle to oscillate freely both ways about the hinge axis, thus resulting in frequent skidding of the wheels on the road surface, especially when the trolley is heavily loaded.

It is an object of the present invention to provide a trailer trolley designed to provide a simple, low-cost solution to the above drawbacks, and which at the same time is highly efficient and reliable.

According to the present invention, there is provided a trailer trolley comprising an axle, in turn comprising an intermediate portion, and two hubs located at opposite ends of said intermediate portion and rotating about a common axis of rotation; the trolley also comprising a suspension, in turn comprising a connecting structure, a mechanical transmission interposed between the connecting structure and said axle, and a hinge allowing said axle to oscillate with respect to said connecting structure about a hinge axis perpendicular to said common axis; the transmission comprising at least a first and at least a second arm, both hinged to said connecting structure and converging with each other and with said connecting structure; said first arm being hinged directly to an angularly fixed member of said hinge; and said second arm being connected to said intermediate portion by angular relative-motion means.

In the trolley defined above, said first and second arm preferably have respective end portions located substantially on diametrically opposite sides of said intermediate portion; and the hinge and relative-motion means are conveniently located below and above the intermediate portion respectively.

A non-limiting embodiment of the present invention will be described by way of example with reference to the accompanying drawings, in which :
Figure 1 shows a partial view in perspective, with parts removed for clarity, of a tyred-wheel trolley in accordance with the teachings of the present invention;
Figure 2 shows a section of the Figure 1 trolley;
Figures 3 to 5 show side views of the Figure 1 trolley in three different operating positions.

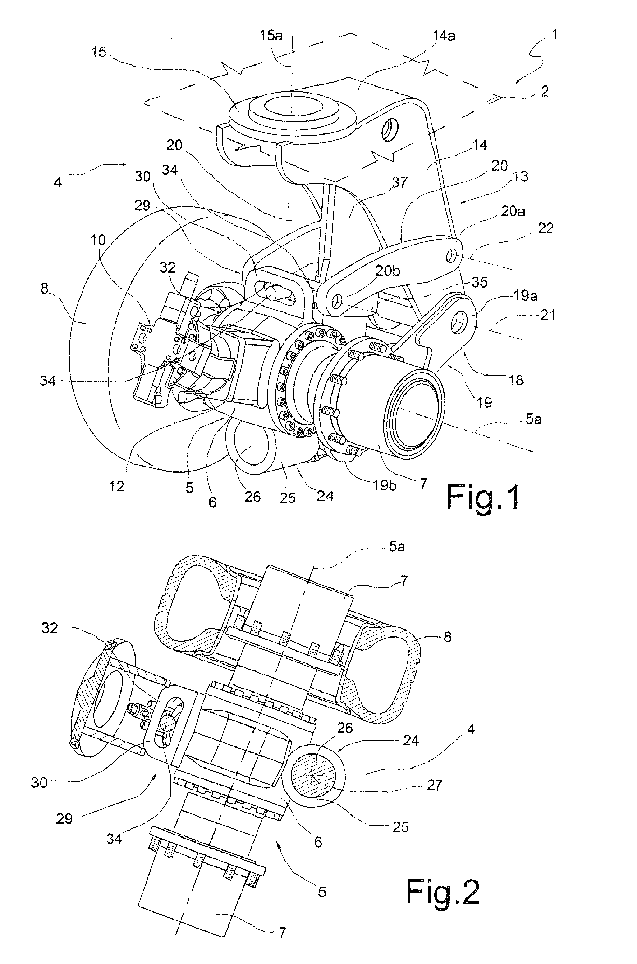

Number 1 in Figure 1 indicates as a whole a tyred-wheel trolley comprising a frame 2 defining a load bed; and a number of tyred-wheel trolleys 4 (only one shown) arranged adjacent to one another under frame 2.

With reference to Figure 1 and particularly Figure 2, each trolley 4 comprises an axle 5 having an axis 5a, and in turn comprising a hollow intermediate portion 6 coaxial with axis 5a, and from which extend, in opposite directions, two hubs 7 for respective coaxial tyred wheels 8 rotating about axis 5a.

In the example shown, hubs 7 are powered by a motor reducer 10 comprising a known drive (not shown) housed in portion 6, and a hydraulic motor 12 connected integrally to and projecting radially from portion 6.

In a variation not shown, the wheels are idle.

As shown in Figure 1, trolley 4 also comprises a hydraulic suspension 13, in turn comprising a connecting structure 14 connected to frame 2 by a pivot 15 with a vertical axis 15a, and a mechanical transmission 18 for controlling movement of axle 5 with respect to connecting structure 14.

Mechanical transmission 18 comprises two bottom arms 19 and two top arms 20, which extend on opposite sides of connecting structure 14, and have respective end portions 19a, 20a hinged to connecting structure 14 to rotate about respective parallel axes 21, 22 a given distance d apart.

The end portions 19b, opposite portions 19a, of the bottom arms are connected to portion 6 by a hinge device 24 under portion 6. More specifically, device 24 comprises a bushing 25 located substantially beneath and contacting portion 6, and connected integrally to portion 6; and a hinge pin 26, which engages bushing 25, is fixed axially, and rotates about a substantially longitudinal axis 27 perpendicular to axes 5a, 21 and 22.

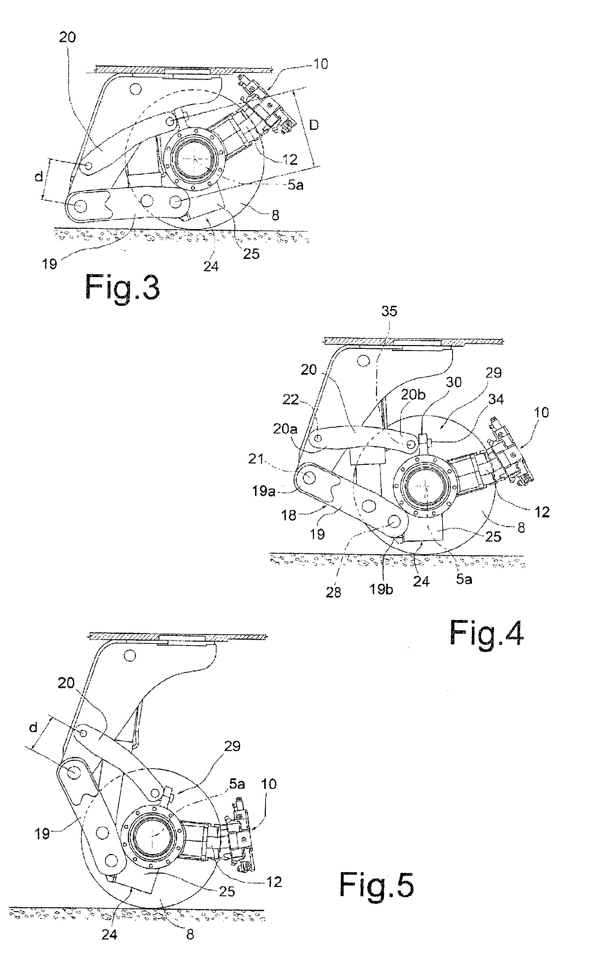

End portions 19b are hinged directly to pin 26 to rotate about a common axis 28 parallel to axes 21 and 22 (Figures 3-5).

End portions 20b, opposite portions 20a, of top arms 20 are connected to portion 6 by a relative-motion device 29 located over portion 6 and on substantially the diametrically opposite side of portion 6 to device 24.

Device 29 comprises an oblong annular portion 30 connected to and projecting from portion 6, and defining a circular slot 32. Slot 32 extends in a plane perpendicular to axis 27, has a centre of curvature along axis 27, and is engaged in angularly sliding manner by a pin 34', which projects from a connecting member 34 extending between portions 20b. Connecting member 34 extends perpendicular to arms 20 and parallel to axes 21 and 22, and portions 20b of arms 20 are hinged to it to rotate about a common axis 35 parallel to axes 21 and 22. As shown in Figures 3 to 5, end portions 19b and 20b are thus hinged at points separated by a distance D greater than distance d, so, in any operating condition, arms 19 and 20 in each pair always converge with each other and with connecting structure 14.

A known hydraulic actuator 37, not described in detail, is interposed between a top portion 14a of structure 14, close to pivot 15, and intermediate portions of arms 19 to control movement of axle 5, and therefore of wheels 8, between an extended position (Figure 5), and a withdrawn position (Figure 3) in which axle 5 is positioned adjacent to frame 2, and the wheels are still distanced from frame 2.

The arrangement of arms 19 and 20, i.e. converging with one another and with connecting structure 14, and connected substantially on diametrically opposite sides of portion 6 of axle 5, provides above all for increasing the load on trolley 4 as compared with known solutions. In particular, distance D being much greater than, and normally twice, distance d greatly increases the load-resisting torque on trolley 4.

The arrangement of arms 19 and 20 also provides, as compared with known solutions, for reducing clearance, and in particular the longitudinal clearance needed for axle 5 to move from the extracted to the withdrawn position. This feature enables the trolleys to be spaced closer together and so increased in number for a given sized trailer, to increase the payload per unit area of load bed.

Axle 5 of trolley 4 is allowed to oscillate about axis 27, but, unlike known solutions, as opposed to oscillating freely, is controlled in its oscillation to predetermined angles imposed by the geometry of circular slot 32, which defines two opposite angular stop shoulders. As such, wheels 8, while still being allowed to oscillate about axis 27, never come into contact with fixed parts of the trailer, regardless of the load condition of the trailer.

Finally, by virtue of the arrangement of arms 19 and 20, hydraulic motor 12 of wheels 8 remains clear of the rolling surface of wheels 8, even with the trolley in the extended position (Figure 5), thus making transport easier over uneven rolling surfaces or speed bumps.

Clearly, changes may be made to trolley 4 as described herein. In particular, transmission 18 may comprise arms differing in design and/or number from those described and illustrated by way of example; and relative-motion device 29 and device 24 may also differ. In particular, the parts of devices 24 and 29 may be inverted.

## Claims

1. A trailer trolley (1) comprising an axle (5), in turn comprising an intermediate portion (6), and two hubs (7) located at opposite ends of said intermediate portion (6) and rotating about a common axis of rotation (5a); the trolley also comprising a suspension (13), in turn comprising a connecting structure (14), a mechanical transmission (18) interposed between the connecting structure (14) and said axle (5), and a hinge (24) allowing said axle (5) to oscillate with respect to said connecting structure (14) about a hinge axis (27) perpendicular to said common axis (5a); the transmission (18) comprising at least a first (18) and at least a second arm (20), both hinged to said connecting structure (14) **characterized in that** the arms (19, 20) are converging with each other and with said connecting structure (14); said first arm (19) being hinged directly to an angularly fixed member (26) of said hinge (24); and said second arm (20) being connected to said intermediate portion (6) by an angular relative-motion device (29)

2. A trolley as claimed in Claim 1, **characterized in that** said first (19) and second arm (20) have respective end portions (19a, 20a) located substantially on diametrically opposite sides of said intermediate portion (6).

3. A trolley as claimed in Claim 1 or 2, **characterized in that** said hinge (24) and said relative-motion device (29) are located below and above said intermediate portion (6) respectively.

4. A trolley as claimed in one of the foregoing Claims, **characterized in that** the angularly fixed member (26) of said hinge (24) comprises a hinge pin (26); said pin engaging in rotary manner a bushing connected integrally to said intermediate portion.

5. A trolley as claimed in any one of the foregoing Claims, **characterized in that** said relative-motion device (29) comprise angular stop means for arresting said axle (5) in two angular limit stop positions.

6. A trolley as claimed in Claim 5, **characterized in that** said relative-motion device (29) comprise a slot (32) on either one of said intermediate portion (6) and said second arm (20); and a pin (34'), which slides inside said slot (32) and is fitted to the other of said intermediate portion (6) and said second arm (20).

7. A trolley as claimed in Claim 6, **characterized in that** said slot (32) is carried by said intermediate portion (6).

## Patentansprüche

1. Anhängertransportwagen (1), der eine Achse (5), die ihrerseits einen Zwischenabschnitt (6) umfasst, und zwei Radnaben (7) umfasst, die an gegenüberliegenden Enden des Zwischenabschnitts (6) angeordnet sind und sich um eine gemeinsame Drehachse (5a) drehen; wobei der Transportwagen außerdem eine Aufhängung (13), die ihrerseits eine Verbindungsstruktur (14), eine mechanische Übertragung (18), die zwischen der Verbindungsstruktur (14) und der Achse (5) dazwischengeschaltet ist, und ein Gelenk (24), das es der Achse (5) ermöglicht, bezüglich der Verbindungsstruktur (14) um eine Gelenkachse (27) senkrecht zu der gemeinsamen Achse (5a) zu oszillieren, umfasst; und die Übertragung (18) mindestens einen ersten (19) und mindestens einen zweiten Arm (20) umfasst, wobei beide über ein Gelenk mit der Verbindungsstruktur (14) verbunden sind, **dadurch gekennzeichnet, dass** sich die Arme (19, 20) gegenseitig annähern und sich der Verbindungsstruktur (14) annähern; wobei der erste Arm (19) über ein Gelenk direkt mit einem winklig befestigten Element (26) des Gelenks (24) verbunden ist; und wobei der zweite Arm (20) mit dem Zwischenabschnitt (6) über eine Relativwinkelbewegungsvorrichtung (29) verbunden ist.

2. Anhängertransportwagen nach Anspruch 1, **dadurch gekennzeichnet, dass** der erste (19) und der zweite Arm (20) jeweilige Endabschnitte (19a, 20a) aufweisen, die im Wesentlichen auf diametral entgegengesetzten Seiten des Zwischenabschnitts (6) angeordnet sind.

3. Anhängertransportwagen nach Anspruch 1 oder 2, **dadurch gekennzeichnet, dass** das Gelenk (24) und die Relativbewegungsvorrichtung (29) unter bzw. über dem jeweiligen Zwischenabschnitt (6) angeordnet sind.

4. Anhängertransportwagen nach einem der vorhergehenden Ansprüche, **dadurch gekennzeichnet, dass** das winklig befestigte Element (26) des Gelenks (24) einen Gelenkstift (26) umfasst; wobei der Stift in drehender Art und Weise in eine Buchse eingreift, die mit dem Zwischenabschnitt einteilig verbunden ist.

5. Anhängertransportwagen nach einem der vorhergehenden Ansprüche, **dadurch gekennzeichnet, dass** die Relativbewegungsvorrichtung (29) Winkelanschlagmittel umfasst, um die Achse (5) in zwei Anschlagpositionen eines Grenzwinkels zu arretieren.

6. Anhängertransportwagen nach Anspruch 5, **dadurch gekennzeichnet, dass** die Relativbewegungsvorrichtung (29) entweder auf dem Zwischenabschnitt (6) oder auf dem zweiten Arm (20) einen Schlitz (32) umfasst; und einen Stift (34'), der innerhalb des Schlitzes (32) gleitet und an dem anderen Zwischenabschnitt (6) und an dem zweiten Arm (20) passend angebracht ist.

7. Anhängertransportwagen nach Anspruch 6, **dadurch gekennzeichnet, dass** der Schlitz (32) von dem Zwischenabschnitt (6) getragen wird.

## Revendications

1. Ensemble roue pour remorque (1) comprenant un essieu (5), comprenant, à son tour, une partie intermédiaire (6), et deux moyeux (7) situés à des extrémités opposées de ladite partie intermédiaire (6) et tournant autour d'un axe de rotation commun (5a) ; l'ensemble roue comprenant également une suspension (13), comprenant, à son tour, une structure de connexion (14), une transmission mécanique (18) intercalée entre la structure de connexion (14) et ledit essieu (5), et une articulation (24) permettant audit essieu (5) d'osciller par rapport à ladite structure de connexion (14) autour d'un axe d'articulation (27) perpendiculaire audit axe commun (5a) ; la transmission (18) comprenant au moins un premier bras (19) et au moins un second bras (20), tous les deux articulés sur ladite structure de connexion (14), **caractérisé en ce que** les bras (19, 20) convergent l'un vers l'autre et vers ladite structure de connexion (14) ; ledit premier bras (19) étant articulé directement sur un élément fixe angulairement (26) de ladite articulation (24) ; et ledit second bras (20) étant relié à ladite partie intermédiaire (6) par un dispositif à mouvement relatif angulaire (29).

2. Ensemble roue selon la revendication 1, **caractérisé en ce que** lesdits premier bras (19) et second bras (20) comportent des parties d'extrémité respectives (19a, 20a) situées sensiblement sur des côtés diamétralement opposés de ladite partie intermédiaire (6).

3. Ensemble roue selon la revendication 1 ou 2, **caractérisé en ce que** ladite articulation (24) et ledit dispositif à mouvement relatif angulaire (29) sont situés, respectivement, au-dessous et au-dessus de ladite partie intermédiaire (6).

4. Ensemble roue selon l'une quelconque des revendications précédentes, **caractérisé en ce que** l'élément fixe angulairement (26) de ladite articulation (24) comprend un axe d'articulation (26) ; ledit axe engageant, en rotation, une douille reliée d'un seul tenant à ladite partie intermédiaire (6).

5. Ensemble roue selon l'une quelconque des revendications précédentes, **caractérisé en ce que** ledit dispositif à mouvement relatif angulaire (29) comprend des moyens de butée angulaires pour arrêter ledit essieu (5) dans deux positions de butée limite angulaires.

6. Ensemble roue selon la revendication 5, **caractérisé en ce que** ledit dispositif à mouvement relatif angulaire (29) comprend une fente (32) sur l'un des éléments parmi ladite partie intermédiaire (6) et ledit second bras (20) ; et une tige (34') qui glisse dans ladite fente (32) et est fixée à l'autre des éléments parmi ladite partie intermédiaire (6) et ledit second bras (20).

7. Ensemble roue selon la revendication 6, **caractérisé en ce que** ladite fente (32) est supportée par ladite partie intermédiaire (6).
